# EUROPÄISCHE PATENTSCHRIFT

(11) **EP 1 363 960 B1**
(45) Veröffentlichungstag und Bekanntmachung des Hinweises auf die Patenterteilung: **13.10.2004**
(21) Anmeldenummer: 02715470.7
(22) Anmeldetag: 24.01.2002
(51) Int. Cl.: C08G 18/10, C08J 9/14

(54) **ISOCYANATFREIE SCHÄUMBARE MISCHUNGEN MIT HOHER HÄRTUNGSGESCHWINDIGKEIT**
ISOCYANATE-FREE EXPANDABLE MIXTURES EXHIBITING A FAST HARDENING RATE
MELANGES EXEMPTS D'ISOCYANATES, APTES AU MOUSSAGE, A VITESSE DE DURCISSEMENT ELEVEE

(30) Priorität: 20.02.2001 DE 10108038; 20.02.2001 DE 10108039; 27.07.2001 DE 10136723; 16.08.2001 DE 10140132
(43) Veröffentlichungstag der Anmeldung: 26.11.2003
(73) Patentinhaber: Consortium für elektrochemische Industrie GmbH, 81379 München (DE)
(72) Erfinder: STANJEK, Volker, 81479 München (DE); SCHINDLER, Wolfram, 84577 Tüssling (DE); PACHALY, Bernd, 84561 Mehring/Öd (DE); BAUER, Andreas, 81371 München (DE)
(74) Vertreter: Fritz, Helmut, Dr.
(86) Internationale Anmeldenummer: PCT/EP2002/000727
(87) Internationale Veröffentlichungsnummer: WO 2002/066532

(56) Entgegenhaltungen:
- EP-A- 0 807 649
- EP-A- 0 931 800
- WO-A-00/04069

## Beschreibung

Die Erfindung betrifft isocyanatfreie schäumbare Mischungen.

Spraybare Montageschäume dienen zum Ausfüllen von Hohlräumen vor allem im Baubereich. Hier werden sie u.a. zum Abdichten von Fugen, z.B. bei Fenstern und Türen eingesetzt, wobei sie als ausgezeichnet isolierende Materialien zu einer guten Wärmedämmung führen. Weitere Anwendungen sind beispielsweise die Isolierung von Rohrleitungen oder das Ausschäumen von Hohlräumen in technischen Geräten.

Bei sämtlichen herkömmlichen Montageschäumen handelt es sich um sogenannte Polyurethanschäume (PU-Schäume), die im unvernetzten Zustand aus Prepolymeren bestehen, die über eine hohe Konzentration an freien Isocyanatgruppen verfügen. Diese Isocyanatgruppen sind in der Lage, mit geeigneten Reaktionspartnern bereits bei Raumtemperatur Additionsreaktionen einzugehen, wodurch eine Aushärtung des Sprayschaumes nach dem Auftrag erreicht wird. Die Schaumstruktur wird dabei durch das Einmengen eines leichtflüchtigen Treibmittels in das noch unvernetzte Rohmaterial und/oder durch Kohlendioxid erzeugt, wobei letzteres durch eine Reaktion von Isocyanaten mit Wasser gebildet wird. Das Ausbringen des Schaumes geschieht in der Regel aus Druckdosen durch den Eigendruck des Treibmittels.

Als Reaktionspartner für die Isocyanate dienen Alkohole mit zwei oder mehr OH-Gruppen - vor allem verzweigte und unverzweigte Polyole - oder aber Wasser. Letzteres reagiert mit Isocyanaten unter der bereits erwähnten Freisetzung von Kohlendioxid zu primären Aminen, die sich dann direkt an eine weitere, noch unverbrauchte Isocyanatgruppe addieren können. Es entstehen Urethan- bzw. Harnstoffeinheiten, die auf Grund ihrer hohen Polarität und ihrer Fähigkeit zur Ausbildung von Wasserstoffbrückenbindungen im ausgehärteten Material teilkristalline Substrukturen ausbilden können und so zu Schäumen mit hoher Härte, Druck- und Reißfestigkeit führen.

Als Treibmittel werden meist Gase verwendet, die bereits bei relativ geringem Druck kondensierbar sind und somit der Prepolymermischung in flüssigem Zustand beigemischt werden können, ohne daß die Spraydosen übermäßig hohen Drücken ausgesetzt werden müssen. Des weiteren enthalten die Prepolymerabmischungen weitere Additive wie z.B. Schaumstabilisatoren, Emulgatoren, Flammschutzmittel, Weichmacher und Katalysatoren. Bei den letzteren handelt es sich meist um organische Zinn(IV)-Verbindungen oder tertiäre Amine. Geeignet sind hier aber beispielsweise auch Eisen(III)-Komplexe.

PU-Sprayschäume werden sowohl als sogenannte einkomponentige (1K-) als auch als zweikomponentige (2K-) Schäume hergestellt. Die 1K-Schäume härten dabei ausschließlich durch den Kontakt der isocyanathaltigen Prepolymermischung mit der Luftfeuchtigkeit aus. Durch das bei den 1K-Schäumen während der Härtungsreaktion freigesetzte Kohlendioxid kann zudem die Schaumbildung unterstützt werden. 2K-Schäume enthalten eine Isocyanat- und eine Polyol-Komponente, die direkt vor dem Verschäumen gut miteinander vermischt werden müssen und durch die Reaktion des Polyols mit den Isocyanaten aushärten. Vorteil der 2K-Systeme ist eine extrem kurze Aushärtdauer von z.T. nur wenigen Minuten bis zu einer vollständigen Härtung. Sie besitzen jedoch den Nachteil, daß sie eine kompliziertere Druckdose mit zwei Kammern benötigen und zudem in der Handhabung deutlich weniger komfortabel sind als die 1K-Systeme.

Die ausgehärteten PU-Schäume zeichnen sich vor allem durch ihre ausgezeichneten mechanischen und wärmedämmenden Eigenschaften aus. Des weiteren besitzen sie eine sehr gute Haftung auf den meisten Untergründen und sind unter trockenen und UVgeschützten Bedingungen von nahezu beliebiger Beständigkeit. Weitere Vorteile liegen in der toxikologischen Unbedenklichkeit der ausgehärteten Schäume ab dem Zeitpunkt, an dem sämtliche Isocyanateinheiten quantitativ abreagiert sind, sowie in ihrer zügigen Aushärtung und ihrer leichten Handhabbarkeit. Auf Grund dieser Eigenschaften haben sich PU-Schäume in der Praxis sehr bewährt.

Allerdings besitzen die PU-Sprayschäume den kritischen Nachteil, daß die Isocyanatgruppen auf Grund ihrer hohen Reaktivität auch ausgesprochen reizende und toxische Wirkungen entfalten können. Auch stehen die Amine, die sich durch eine Reaktion von monomeren Diisocyanaten mit einem Überschuß an Wasser bilden können, in vielen Fällen im Verdacht, krebserregend zu sein. Derartige monomere Diisocyanate sind in den meisten Sprayschaumabmischungen neben den isocyanatterminierten Prepolymeren ebenfalls enthalten. Daher sind die unvernetzten Sprayschaummassen bis zur vollständigen Aushärtung toxikologisch nicht unbedenklich. Kritisch ist hier neben dem direkten Kontakt der Prepolymermischung mit der Haut vor allem auch eine mögliche Aerosolbildung während des Aufbringen des Schaumes oder das Verdampfen von niedermolekularen Bestandteilen, z.B. von monomeren Isocyanaten. Dadurch besteht die Gefahr, daß toxikologisch bedenkliche Verbindungen über die Atemluft aufgenommen werden. Zudem besitzen Isocyanate ein erhebliches allergenes Potential und können u.a. Asthmaanfälle auslösen. Verschärft werden diese Risiken noch durch die Tatsache, daß die PU-Sprayschäume oftmals nicht von geschulten und geübten Anwendern sondern von Bastlern und Heimwerkern verwendet werden, so daß eine sachgerechte Handhabung nicht immer vorausgesetzt werden kann.

Als Folge des von herkömmlichen PU-Schäumen ausgehenden Gefährdungspotentials und der damit verbundenen Kennzeichnungspflicht hat sich zusätzlich auch hoch das Problem einer stark sinkenden Akzeptanz der entsprechenden Produkte beim Anwender ergeben. Zudem gelten ganz oder teilweise entleerte Spraydosen als Sondermüll und müssen entsprechend gekennzeichnet und in einigen Ländern wie z.B. Deutschland sogar mittels eines kostenintensiven Recyclingsystems einer wiederverwertung zugänglich gemacht werden.

Um diese Nachteile zu überwinden, wurden u.a. in DE-A-43 03 848 bereits Prepolymere für Sprayschäume beschrieben, die keine bzw. nur geringe Konzentrationen an monomeren Isocyanaten enthalten. Nachteilig an solchen Systemen ist jedoch die Tatsache, daß die Prepolymere noch immer über Isocyanatgruppen verfügen, so daß derartige PU-Sprayschäume unter toxikologischen Gesichtspunkten zwar als günstiger als herkömmliche Schäume, nicht aber als unbedenklich zu bezeichnen sind. Auch werden die Akzeptanz- und Abfallprobleme durch derartige Schaumsysteme nicht gelöst.

Es wäre daher wünschenswert, wenn zur Herstellung von Sprayschäumen Prepolymere zur Verfügung stehen würden, die nicht über Isocyanatgruppen vernetzen und somit toxikologisch unbedenklich sind. Allerdings sollten sich auch mit diesen Prepolymermischungen Sprayschäume herstellen lassen, die im ausgehärteten Zustand ähnlich gute Eigenschaften und vor allem eine vergleichbare Härte aufweisen wie herkömmliche isocyanathaltige PU-Schäume. Außerdem müssen auch einkomponentige Sprayschaumsysteme möglich sein, die ausschließlich über den Kontakt mit der Luftfeuchtigkeit aushärten. Dabei sollten sie eine vergleichbar problemlose Handhabbarkeit und Verarbeitbarkeit inklusive einer hohen Härtungsgeschwindigkeit auch bei niedriger Katalysatorkonzentration aufweisen. Letzteres ist vor allem deshalb wichtig, da die in der Regel als Katalysatoren eingesetzten zinnorganischen Verbindungen toxikologisch ebenfalls bedenklich sind. Zudem enthalten Zinnkatalysatoren oftmals auch noch Spuren hochtoxischer Tributylzinnderivate. Von besonderem Vorteil wäre daher ein Prepolymer-System, welches derart günstige Härtungseigenschaften besitzt, daß auf einen Zinnkatalysator ganz verzichtet werden kann.

In der Literatur sind hier z.B. in US-A-6020389 kondensationsvernetzende Siliconschäume beschrieben, die alkoxy-, acyloxy- oder oximoterminierte Siliconprepolymere enthalten. Derartige schäumbare Mischungen sind zwar prinzipiell zur Herstellung von IK-Schäumen geeignet, die bei Raumtemperatur nur durch die Luftfeuchtigkeit aushärten. Allerdings lassen sich derartige Systeme aus rein siliconhaltigen Prepolymeren nur zur Erzeugung von elastischen weichen bis halbharten Schäumen einsetzen. Zur Herstellung von harten, nicht spröden Montageschäumen sind sie nicht geeignet.

In der WO 00/04069 werden Prepolymerabmischungen mit alkoxysilanterminierten Polyurethanprepolymeren zur Herstellung von harten Sprayschäumen beschrieben. Dabei handelt es sich um Polymere mit einem herkömmlichen Polyurethanrückgrat, welches durch eine Umsetzung von gängigen Diisocyanaten mit Polyolen gebildet werden kann. Wird bei diesem ersten Reaktionsschritt ein entsprechender Überschuß an Diisocyanaten eingesetzt, so werden isocyanatterminierte Prepolymere erhalten. Diese können dann in einem zweiten Reaktionsschritt mit Aminopropyltrimethoxysilanderivaten zu den gewünschten alkoxysilanterminierten Polyurethanprepolymeren umgesetzt werden. Diese Prepolymere können unter Einwirkung eines geeigneten Katalysators in Gegenwart von Wasser unter Methanolabspaltung miteinander kondensieren und dadurch aushärten. Das Wasser kann dabei als solches zugesetzt werden oder auch aus einem Kontakt mit der Luftfeuchtigkeit stammen. Somit lassen sich mit einem solchen System sowohl 1K- als auch 2K-Schäume herstellen.

Die in WO 00/04069 beschriebenen alkoxysilanterminierten Polyurethanprepolymere besitzen einen Spacer mit 2-10 Kohlenstoffatomen zwischen den Alkoxysilanterminierungen und einer benachbarten Urethan- oder Harnstoffeinheit. Nachteilig an diesem System ist die nur mäßige Reaktivität dieser silanterminierten Polyurethanprepolymere. Deshalb sind relativ hohe Konzentrationen eines Zinnkatalysators zur ausreichend schnellen Aushärtung erforderlich.

Aufgabe der vorliegenden Erfindung war es daher, isocyanatfreie Prepolymerabmischungen zu Verfügung zu stellen, die zur Herstellung von schnellhärtenden Sprayschäumen geeignet sind.

Gegenstand der Erfindung sind isocyanatfreie schäumbare Mischungen, enthaltend
(A) isocyanatfreie, alkoxysilanterminierte Prepolymere (A) welche über Silanterminierungen der allgemeinen Formel [1], 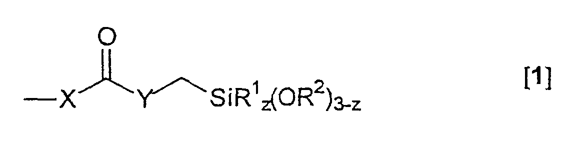 verfügen, in der
   - X und Y: ein Sauerstoffatom, eine N-R³-Gruppe oder ein Schwefelatom,
   - R¹: einen Alkyl-, Cycloalkyl-, Alkenyl- oder Arylrest mit 1-10 Kohlenstoffatomen,
   - R²: einen Alkylrest mit 1-2 Kohlenstoffatomen oder einen ω-Oxaalkyl-alkylrest mit insgesamt 2-10 Kohlenstoffatomen,
   - R³: ein Wasserstoffatom, einen Alkyl-, Alkenyl- oder Arylrest mit 1-10 Kohlenstoffatomen oder eine -CH₂-SiR¹_{z}(OR²)_{3-z}-Gruppe und,
   - z: die Werte 0 oder 1 bedeuten,
   mit der Maßgabe, daß mindestens eine der beiden Gruppen X oder Y eine NH-Funktion darstellt und
(B) Treibmittel.

In den isocyanatfreien, schäumbaren Mischungen werden alkoxysilylterminierte Prepolymere eingesetzt, deren vernetzbaren Alkoxysilylgruppen nur durch einen Methylspacer von einer Urethan- oder Harnstoffeinheit getrennt sind.
Dadurch besitzen die Mischungen in Gegenwart von Luftfeuchtigkeit extrem kurze Klebfreizeiten und können sogar zinnfrei vernetzt werden.

Als Reste R¹ werden Methyl-, Ethyl- oder Phenylgruppen bevorzugt. Bei den Resten R² handelt es sich bevorzugt um Methylgruppen und als Reste R³ werden Wasserstoff, Alkylreste mit 1-4 Kohlenstoffatomen, Cyclohexyl- und Phenylreste bevorzugt.

Die Hauptketten der Prepolymere (A) können verzweigt oder unverzweigt sein. Die mittleren Kettenlängen können beliebig entsprechend der jeweils gewünschten Eigenschaften, wie Viskosität der unvernetzten Mischung und Härte des fertigen Schaumes, angepaßt werden. Bei den Hauptketten kann es sich um Organopolysiloxane, z.B. Dimethylorganopolysiloxane, um Organosiloxan-Polyurethan-Copolymere oder auch um organische Ketten, z.B. Polyalkane, Polyether, Polyester, Polycarbonate, Polyurethane, Polyharnstoffe, Vinylacetatpolymere oder - copolymere handeln. Selbstverständlich können auch beliebige Mischungen oder Kombinationen aus Prepolymeren mit verschiedenen Hauptketten eingesetzt werden. Dabei hat der Einsatz von Organopolysiloxanen oder Organosiloxan-Polyurethan-Copolymeren, gegebenenfalls in Kombination mit weiteren Prepolymeren mit organischen Hauptketten den Vorteil, daß die resultierenden Schäume über ein günstigeres Brandverhalten verfügen.

Besonders bevorzugt sind isocyanatfreie schäumbare Mischungen, enthaltend Prepolymere (A), die über Silanterminierungen der allgemeinen Formel [2] 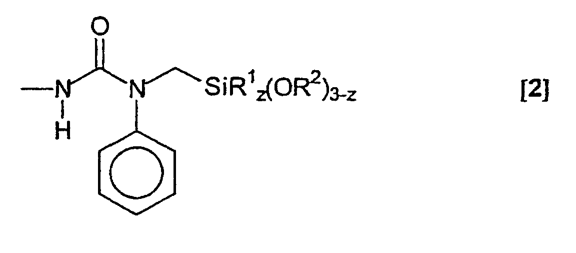 verfügen, wobei R¹, R², und z die oben angegebenen Bedeutungen aufweisen.

Aus schäumbaren Mischungen, die Prepolymere (A) mit Silanterminierungen der allgemeinen Formel [2] enthalten, hergestellte Schäume zeichnen sich durch eine sehr gute Struktur aus - sowohl bei freier Verschäumung als auch beim Ausschäumen von Fugen. Zudem lassen sich Terminierungen der allgemeinen Formel [2] durch den Einsatz von sehr einfach und preisgünstig herstellbaren Edukten erzeugen.

Als Treibmittel (B) sind dieselben bereits bei relativ geringen Drücken kondensierbaren Gase geeignet, die auch zur Herstellung herkömmlicher isocyanathaltiger Sprayschäume verwendet werden. Gängige Treibmittel sind beispielsweise Kohlenwasserstoffe mit jeweils 1-5, insbesondere 3-5 Kohlenstoffatomen , Fluorkohlenwasserstoffe mit 1-5 Kohlenstoffatomen oder Dimethylether sowie deren Mischungen.

Es können beispielsweise, bezogen auf 100 Gewichtsteile Prepolymer (A), bis zu 100 Gewichtsteile, vorzugsweise 1 bis 40 Gewichtsteile eines niedermolekularen Reaktivverdünners (C) mit einer Viskosität von höchstens 5 Pas bei 20°C, der mindestens eine C₁- bis C₆-Alkoxysilylgrüppe pro Molekül aufweist, in der Mischung enthalten sein.

Als Reaktivverdünner (C) sind prinzipiell alle niedermolekularen Verbindungen mit einer Viskosität von vorzugsweise höchstens 5, insbesondere höchstens 2 Pas bei 20°C geeignet, die über reaktiven Alkoxysilylgruppen verfügen, über die sie während der Aushärtung des Schaumes mit in das entstehende dreidimensionale Netzwerk eingebaut werden können. Der Reaktivverdünner (C) dient vor allem zur Erniedrigung der Viskosität von gegebenenfalls relativ hochviskosen Prepolymermischungen. Er kann bereits während der Synthese der Prepolymere (A) zugegeben werden und so auch das Auftreten von gegebenenfalls hochviskosen und damit nur noch schwer zu handhabenden Zwischenprodukten verhindern. Vorzugsweise verfügt der Reaktivverdünner (C) über eine hinreichend hohe (Gewichts-) Dichte an vernetzbaren Alkoxysilylgruppen, so daß er während der Härtung in das entstehende Netzwerk eingebaut werden kann, ohne die Netzwerkdichte zu erniedrigen.

Bevorzugte Reaktivverdünner (C) sind die preisgünstigen Alkyltrimethoxysilane, wie Methyltrimethoxysilan sowie Vinyl- oder Phenyltrimethoxysilan, und deren Teilhydrolysate.

Die Prepolymere (A) besitzen eine so hohe Reaktivität, daß man mit ihnen schäumbare 1-Komponentensysteme herstellen kann, die auch bei einem Zinnkatalysatorgehalt, beispielsweise mit Dibutylzinndilaurat, von <0,2 Gew.-%, bezogen auf das Prepolymer (A) Klebfreizeiten von maximal 5 min, insbesondere maximal 3, zum Teil sogar weniger als 1 min bei 20°C aufweisen. Sogar zinnfreie Systeme sind mit den Prepolymeren (A) problemlos möglich. Werden - wie im Stand der Technik beschrieben - Zinnkatalysatorkonzentrationen von mehr als 1 Gew.-%, bezogen auf das Prepolymer (A) eingesetzt, so ist der resultierende Schaum nach dem Aufbringen bereits nach wenigen Sekunden klebfrei. Vorzugsweise sind die schäumbaren Mischungen frei von schwermetallhaltigem Katalysator.

Neben kurzen Klebfreizeiten und der Verwendung von kleinen Katalysatorkonzentrationen und/oder der Verwendung von toxikologisch unbedenklichen zinnfreien Katalysatoren bietet die hohe Reaktivität der Prepolymere (A) einen weiteren wichtigen Vorteil: So reagieren die Prepolymere (A) mit der Luftfeuchtigkeit deutlich schneller als die als Reaktivverdünner (C) eingesetzten Alkyl-, Vinyl- oder Phenyltrimethoxysilane. Die herkömmlichen Prepolymeren reagieren nicht nennenswert schneller oder sogar langsamer mit der Luftfeuchtigkeit als die oben genannten Reaktivverdünner (C).
Im Unterschied zu herkömmlichen schäumbaren, silanterminierten Prepolymeren können diese sehr preisgünstigen Verbindungen daher auch in größeren Mengen, insbesondere >1 Gew.-% bezogen auf das Propolymer (A) als Reaktivverdünner (C) in den vorliegenden schäumbaren Mischungen eingesetzt werden, ohne die Härtungsdauer bzw. die Klebfreizeiten deutlich zu verlängern.

Denn die Kondensation zweier Moleküle der oben aufgeführten Reaktivverdünner (C) oder auch die Kondensation eines Reaktivverdünnermoleküls mit einem Prepolymermolekül führt nicht zu einer nennenswerten Kettenverlängerung und somit auch nicht zu einer Erhöhung der Viskosität. Es kommt zu keiner Versteifung des Schaumes und somit auch zu keiner Fixierung der Schaumstruktur. Trotz allem werden durch diese Kondensationsreaktionen bereits erhebliche Mengen an Wasser aus der Luftfeuchtigkeit verbraucht und entsprechende Methanolmengen freigesetzt. Somit führt die Gegenwart der oben aufgeführten Reaktivverdünner in Konzentrationen von ca. 1 Gew.-% beim Einsatz von herkömmlichen Prepolymeren bereits zu einer deutlichen Verlangsamung der Schaumhärtung und zu deutlich längeren Klebfreizeiten. Durch noch höhere Konzentrationen der oben genannten Reaktivverdünner wird die Schaumhärtung weiter drastisch verlangsamt; z.T. treten trotz Zinnkatalysatorkonzentrationen von >1,5 Gew.-% Klebfreizeiten von mehreren Stunden auf. In Folge dieser sehr deutlichen Verlangsamung der Schaumhärtung kommt es außerdem zu einer entsprechend langsamen Fixierung der Schaumstruktur, was oftmals zu einem - zumindest teilweisen - Zusammenbrechen des Schaumes vor dessen Aushärtung führt. Der Zusammenbruch der Schaumstruktur wird zudem noch durch die - in Gegenwart des Reaktivverdünners (C) erhöhte - Methanolfreisetzung begünstigt, u.a. durch die damit verbundene Viskositätserniedrigung.

Dahingegen kondensieren die deutlich reaktiveren Prepolymere (A) auch in Gegenwart eines oder mehrerer der oben genannten Reaktivverdünner (C) zunächst hauptsächlich miteinander. Kondensationsreaktionen unter Beteiligung des reaktionsträgeren Reaktivverdünners (C) verlaufen deutlich langsamer. So bilden sich direkt zu Beginn der Schaumhärtung langkettige Polymere oder sogar lose Netzwerke, wodurch die Schaumstruktur stabilisiert wird. Als Folge bildet sich sehr schnell ein relativ weicher aber bereits klebfreier, schneidbarer und in seiner Struktur beständiger Schaum. Erst beim Fortschreiten der Reaktion, d.h. bei der vollständigen Erhärtung des anfänglich noch weichen Schaumes, wird auch der Reaktivverdünner (C) vollständig in das immer engmaschiger werdende Netzwerk eingebaut.

Durch den somit möglichen Einsatz auch von höheren Konzentrationen von >1-5 Gew.-%, bezogen auf Prepolymer (A), eines oder mehrerer der oben aufgeführten preisgünstigen Reaktivverdünner (C) können die bekannten Probleme mit zu hohen Viskositäten der silanterminierten Prepolymere gelöst werden.

Bei der Herstellung der Prepolymere (A) wird vorzugsweise Silan eingesetzt, das ausgewählt wird aus Silanen der allgemeinen Formeln [3] und [4] 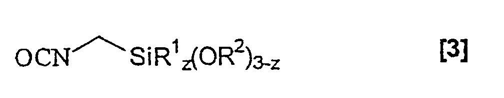 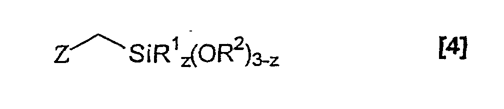 wobei
- Z: eine OH-, SH- oder eine NHR³-Gruppe bedeutet und
- R¹, R² und z: die oben angegebenen Bedeutungen besitzen.

Beim Einsatz von Silan der allgemeinen Formel [3] wird dieses bevorzugt mit einem isocyanatreaktiven Prepolymer, d.h. mit einem OH-, SH- oder NHR³-terminierten Prepolymer umgesetzt oder aber mit einem entsprechend terminierten Precursor des Prepolymers. Letzterer wird dann in weiteren Reaktionsschritten zu dem fertigen Prepolymer umgesetzt. Beim Einsatz des Silans der allgemeinen Formel [4] wird dieses mit einem NCO-terminierten Prepolymer umgesetzt, oder aber mit einem NCO-Gruppen enthaltenden Precursor des Prepolymers. Letzterer wird dann in weiteren Reaktionsschritten zu dem fertigen Prepolymer umgesetzt.

Besonders bevorzugt ist der Einsatz des Silans der allgemeinen Formel [5], 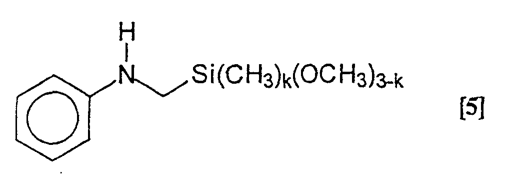 in der
k die Werte 0 oder 1 bedeutet,
welches sich durch eine Reaktion aus Chlormethyltrimethoxysilan oder Chlormethyldimethoxymethylsilan mit Anilin, d.h. aus sehr einfachen Edukten problemlos in nur einem Reaktionsschritt herstellen läßt. Beim Einsatz dieses Silans werden Prepolymere (A) mit Terminierungen entsprechend der allgemeinen Formel [2] erhalten.

Bevorzugte Edukte zur Herstellung der Prepolymere (A) sind neben den Silanen der allgemeinen Formeln [3] bis [5] OH-terminierte Polyole und/oder hydroxyalkyl- oder aminoalkylterminierte Polysiloxane sowie Di- oder Polyisocyanate. Die Konzentrationen aller an sämtlichen Reaktionsschritten beteiligter Isocyanatgruppen und aller isocyanatreaktiver Gruppen sowie die Reaktionsbedingungen sind dabei so gewählt, daß im Laufe der Prepolymersynthese sämtliche Isocyanatgruppen abreagieren. Das fertige Prepolymer (A) ist somit isocyanatfrei. Des weiteren sind die Konzentrationsverhältnisse sowie die Reihenfolge der Reaktionsschritte bevorzugt so gewählt, daß sämtliche Kettenenden der Prepolymere (A) mit Alkoxysilylgruppen entsprechend der allgemeinen Formel [1] terminiert sind.

Als Polyole für die Herstellung der Prepolymere (A) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit zwei oder mehr OH-Funktionen eingesetzt werden. Als hydroxyalkyl- oder aminoalkylterminierte Polysiloxane werden bevorzugt Verbindungen der allgemeinen Formel [6] 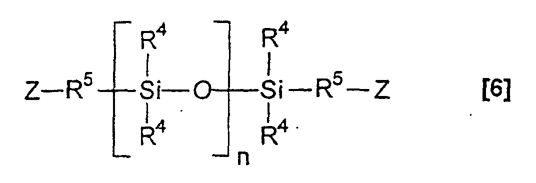 eingesetzt, in der
- R⁴: einen Kohlenwasserstoffrest mit 1 bis 12 Kohlenstoffatomen, bevorzugt Methylreste,
- R⁵: eine verzweigte oder unverzweigte Kohlenwasserstoffkette mit 1-12 Kohlenstoffatomen, bevorzugt Propylenkette und
- n: eine Zahl von 1 bis 2000, bevorzugt eine Zahl von 5 bis 100 bedeuten und
- Z: die vorstehenden Bedeutungen aufweist.

Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder Biuret-triisocyanate

Besitzen die fertigen Prepolymere (A) eine so hohe Viskosität, daß ein Reaktivverdünner (C) zur Viskositätserniedrigung eingesetzt werden muß, so wird dieser bevorzugt bereits während der Synthese der Prepolymere (A) zugegeben, um die Entstehung von hochviskosen und damit nur schwer zu handhabenden Produkten zu verhindern. Sind dabei auch nach der Zugabe des Reaktivverdünners noch zu irgendeinem Zeitpunkt freie Isocyanatgruppen in der Reaktionsmischung zugegen, so muß der Reaktivverdünner (C) unreaktiv gegenüber Isocyanaten sein.

Vorzugsweise ist der Reaktivverdünner (C) mit allen Edukten und Zwischenprodukten beliebig mischbar.

In einer besonderen Ausführungsform wird das Prepolymer (AO) hergestellt durch Addition eines Silans, der allgemeinen Formel [3] an einen Alkohol (A2) mit mindestens zwei OH-Funktionen pro Molekül, der aufgebaut ist aus verzweigten oder unverzweigten gegebenenfalls mit Halogenatomen, C₁- bis C₆-Alkyl-, -Alkoxy- oder -Acyloxyresten substituierten Kohlenstoffketten, die gegebenenfalls unterbrochen sind durch Gruppen, die ausgewählt werden aus Ether-, Carbonyl-, Estergruppen, aromatischen und cycloaliphatischen Einheiten, wobei der Alkohol (A2) keine Urethan- oder Harnstoffeinheiten enthält.

So wurde gefunden, daß vor allem die Konzentration der Urethanund/oder Harnstoffeinheiten in den Prepolymeren und nur im untergeordnetem Maße die mittlere Molekülmasse für die Viskosität der alkoxysilanterminierten Prepolymere verantwortlich ist. Sämtliche bekannte Verfahren, bei denen ausschließlich Polyurethanprepolymere, deren Kern aus Polyolen und Polyisocyanaten hergestellt worden ist und daher über entsprechend viele Urethaneinheiten verfügt, führen somit grundsätzlich zu sehr hochviskosen Produkten, sowie als Polyolkomponente entsprechend kurzkettige Verbindungen eingesetzt werden. Andererseits ist in spraybaren Montageschäumen aber gerade der Einsatz von kurzkettigen Polymeren oder sogar von monomeren Verbindungen mit mindestens zwei Alkoxysilylgruppen wünschenswert. Denn nur so kann eine hinreichend hohe Konzentration an vernetzbaren Gruppen erreicht werden, welche zum Aufbau einer hohen Netzwerkdichte und der damit verbunden hohen Schaumhärte während der Aushärtung notwendig ist. Diesbezüglich stellt der Einsatz der Prepolymere (AO), die erhältlich sind durch Einsatz der Alkohole (A2) und eines Silans der allgemeinen Formel [3], eine deutliche Verbesserung gegenüber den bekannten Konzepten dar.

Als Alkohole (A2) können beispielsweise sämtliche verzweigten und unverzweigten OH-terminierte Polyether- und Polyesterpolyole eingesetzt werden, wie sie auch bei der Herstellung von herkömmlichen isocyanathaltigen Sprayschäumen Verwendung finden. Hinsichtlich der Kettenlänge und des Verzweigungsgrades der Alkohole (A2) gibt es keinerlei Beschränkungen. Besonders geeignet sind verzweigte oder unverzweigte Polyole mit mittleren Molekülmassen (Zahlenmittel Mn)von 200-2000 g/mol, insbesondere 500 bis 1500. Aber auch weitere OH-terminierte Polymere, z.B. OH-terminierte vinylacetatpolymere oder -copolymere kommen hier als Edukte in Frage. Des weiteren sind auch Polymere geeignet, die über freie OH-Funktionen in der Kette verfügen, gegebenenfalls zusätzlich zu den terminalen OH-Gruppen.

Neben den polymeren Alkoholen können auch sämtliche monomere Alkohole mit mindestens zwei OH-Funktionen bzw. Mischungen aus polymeren und monomeren Alkoholen als Alkohole (A2) eingesetzt werden. Als Beispiele wären hier Verbindungen wie Ethylenglycol, Glycerin, die verschiedenen Propan-, Butan-, Pentan- oder Hexandiolisomeren, die verschiedenen Pentosen und Hexosen sowie deren Derivate oder auch Petaerythrotetraol zu nennen. Selbstverständlich können auch Mischungen aus verschiedenen polymeren und/oder monomeren Alkoholen (A2) eingesetzt werden.

Die schäumbaren Mischungen können dabei neben den unter Einsatz von Alkoholen (A2) und eines Silans entsprechend der Formel [3] hergestellten Prepolymeren (A) auch noch weitere alkoxysilanterminierte Prepolymere enthalten. Dabei kann es sich auch um alkoxysilanterminierte Polyurethanprepolymere (U) handeln, die den Kern bzw. Rücken eines herkömmlichen Polyurethanprepolymers aufweisen, d.h. deren Kern durch die Reaktion eines Polyisocyanates mit einem Polyol gebildet worden ist. Derartige Kombinationen aus relativ hochviskosen Polyurethanprepolymeren mit den vergleichsweise niederviskosen unter Einsatz von Alkoholen (A2) hergestellten Prepolymeren (A) besitzen den Vorteil, daß man die Viskosität der resultierenden Mischung in weiten Bereichen und weitgehend unabhängig von der Konzentration an vernetzungsfähigen Alkoxysilylgruppen durch die Wahl geeigneter Mischungsverhältnisse genau auf den jeweiligen Bedarf hin einstellen kann.

Als Polyurethanprepolymere (U) sind in derartigen Mischungen prinzipiell alle isocyanatfreien alkoxysilanterminierten Polyurethanprepolymere geeignet. Sie lassen sich beispielsweise durch die oben beschriebenen Reaktionen der Silane der allgemeinen Formeln [3] oder [4] mit OH- bzw. NCO-terminierten Prepolymeren herstellen, welche in ihrem Molekülgerüst.über Urethan- und/oder Harnstoffeinheiten verfügen.

In einer bevorzugten Ausführungsform der Erfindung werden die alkoxysilanterminierten Prepolymere (AO), die keinen Polyurethankern aufweisen, mit alkoxysilanterminierten Polyurethanprepolymeren (U) kombiniert, die sich durch eine Reaktion von isocyanatfunktionellen Alkoxysilanen mit OH-funktionellen Polyurethanprepolymeren herstellen lassen. Die Polyurethaneinheiten des OH-funktionellen Polyurethanprepolymeren werden dabei bevorzugt durch Reaktion eines üblichen Polyisocyanates mit einem Polyol gebildet. Diese Ausführungform besitzt den Vorteil, daß sich die entsprechenden Mischungen der verschiedenen alkoxysilanterminierten Prepolymere besonders ökonomisch produzieren lassen. So kann beispielsweise zunächst eine Mischung aus OH-terminierten Polyurethanprepolymeren und den Alkoholen (A2) erzeugt werden, die dann in nur einem Reaktionsschritt mit einer entsprechenden Menge eines isocyanatfunktionellen Alkoxysilans der allgemeinen Formel [3] umgesetzt wird.

Ein besonders bevorzugtes Herstellungsverfahren für eine derartige Mischung aus Prepolymeren (AO) ohne Polyurethankern mit alkoxysilanterminierten Polyurethanprepolymeren (U) mit Polyurethankern erfolgt durch folgende Verfahrenschritte: Alkohol (A2) wird mit einem Unterschuß eines Diisocyanates umgesetzt, wobei eine Mischung aus dem nicht umgesetzten Alkohol (A2) und OH-terminierten Polyurethanen mit verschiedenen Kettenlängen und Urethangruppengehalten erzeugt wird. In einem zweiten Reaktionsschritt wird diese Mischung dann mit einem isocyanatfunktionellen Alkoxysilan der allgemeinen Formel [3] zur Mischung aus Prepolymeren (AO) ohne Polyurethankern mit Polyurethanprepolymeren (U) umgesetzt. Über das Ausmaß des Unterschusses an Diisocyanat kann so das Verhältnis Prepolymer (AO) zu Prepolymer (U), respektive die Viskosität der resultierenden Prepolymermischung eingestellt werden, während man über die mittlere Molekülmasse der eingesetzten Alkohole (A2) den Gehalt an Alkoxysilylgruppen und damit Härte und Sprödigkeit des fertig vernetzten Schaumes regulieren kann. Die so hergestelltendie Polyurethanprepolymere (U) weisen Silanterminierungen der allgemeinen Formel [1] auf und sind deshalb, wie die Prepolymere (AO), auch Prepolymere (A) .

Die fertige Prepolymermischung, bestehend entweder ausschließlich aus den Prepolymeren (AO) oder aus einer Mischung enthaltend sowohl Prepolymere (AO) als auch alkoxysilanterminierte Polyurethanprepolymere (U) und/oder weitere alkoxysilanterminierte Prepolymere, weist bevorzugt eine Viskosität < 50 Pas bei 50 °C besonders bevorzugt eine Viskosität von < 25 Pas bei 50 °C auf.

Vorzugsweise weisen die weiteren Prepolymere, insbesondere die Polyurethanprepolymere (U) Silanterminierungen der allgemeinen Formel [1] auf und sind deshalb ebenfalls Prepolymere (A).

Die bei der Herstellung der Prepolymeren (A) auftretenden Reaktion zwischen Isocyanatgruppen und isocyanatreaktiven Gruppen werden bevorzugt durch einen Katalysator beschleunigt. Bevorzugt werden dabei dieselben Katalysatoren eingesetzt, die unten auch als Härtungskatalysatoren (D) für den Montageschaum aufgeführt sind. Gegebenenfalls kann derselbe Katalysator bzw. dieselbe Kombination mehrerer Katalysatoren, welche die Prepolymerherstellung katalysiert, auch als Härtungskatalysator (D) für die Schaumhärtung eingesetzt werden. In diesem Fall ist der Härtungskatalysator (D) bereits in dem fertigen Prepolymer enthalten und braucht bei der Compoundierung der schäumbaren Mischung nicht mehr extra zugegeben werden.

Zur Erzielung einer schnellen Aushärtung des Schaumes bei Raumtemperatur kann gegebenenfalls ein Härtungskatalysatoren (D) zugesetzt werden. Wie bereits erwähnt kommen hier u.a. die zu diesem Zwecke üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., in Frage. Des weiteren können auch Titanate, z.B. Titan(IV)isopropylat, Eisen(III)-Verbindungen, z.B. Eisen(III)-acetylacetonoat, oder auch Amine, z.B. Aminopropyltrimethoxysilan, N-(2-Aminoethyl)-aminopropyltrimethoxysilan, Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, N-Ethylmorpholinin etc., eingesetzt werden. Aber auch zahlreiche weiter organische und anorganische Schwermetallverbindungen sowie organische und anorganische Lewissäuren oder -basen können hier eingesetzt werden. Zudem kann die Vernetzungsgeschwindigkeit auch durch die Kombination verschiedener Katalysatoren bzw. von Katalysatoren mit verschiedenen Cokatalysatoren weiter gesteigert werden.

Die isocyanatfreien, schäumbaren Mischungen können des weiteren die üblichen Zusätze, wie beispielsweise Schaumstabilisatoren und Zellregulantien, Flammschutzmittel, Thixotropiermittel und/oder Weichmacher enthalten. Als Schaumstabilisatoren können vor allem die handelsüblichen durch Polyetherseitenketten modifizierten Siliconoligomeren eingesetzt werden. Als Flammschutzmittel eignen sich u.a. die bekannten phosphorhaltigen Verbindungen, vor allem Phosphate und Phosphonate, halogenierte und halogenfreie Phosphorsäureester sowie auch halogenierte Polyester und Polyole oder Chlorparaffine.

Die isocyanatfreien schäumbaren Mischungen können direkt als einkomponentige isocyanatfreie Sprayschäume eingesetzt werden.

Die Sprayschäume werden vorzugsweise in Druckbehältern, wie Druckdosen, aufbewahrt.

Alle vorstehenden Symbole der vorstehenden Formeln weisen ihre Bedeutungen jeweils unabhängig voneinander auf. In allen Formeln ist das Siliciumatom vierwertig.

Die folgenden Beispiele dienen der Erläuterung der Erfindung ohne diese zu beschränken. Soweit nicht anders angegeben sind alle Mengen- und Prozentangaben auf das Gewicht bezogen, alle Drücke 0,10 MPa (abs.) und alle Temperaturen 20°C.

### Beispiel 1:

### Herstellung von Isocyanatomethyltrimethoxysilan:

Ausgehend von Chlormethyltrimethoxysilan wird Methylcarbamatomethyltrimethoxysilan gemäß bekannter Verfahren (US 3,494,951) synthetisiert.

Dieses wird in ein Quartz-Pyrolyserohr, das mit Quarzwolle gefüllt ist, im Argon-Gasstrom eingepumpt. Die Temperatur im Pyrolyserohr beträgt zwischen 420 und 470 °C. Das Rohprodukt wird am Ende der beheizten Strecke mit Hilfe eines Kühlers auskondensiert und gesammelt. Die farblose Flüssigkeit wird durch Destillation unter reduziertem Druck gereinigt. Über Kopf geht bei ca. 88-90 °C (82 mbar) das gewünschte Produkt in über 99 %-iger Reinheit über, während im Sumpf das nicht umgesetzte Carbamat reisoliert werden kann. Dieses wird der Pyrolyse direkt wieder zugeführt.

Ausgehend von 56,9 g (273 mmol) Methylcarbamatomethyltrimethoxysilan werden so 33,9 g (191 mmol) des gewünschten Produkts Isocyanatomethyltrimethoxysilan in einer Reinheit > 97 % enthalten. Dies entspricht einer Ausbeute von 70 % d. Th.

### Beispiel 2:

### Herstellung von N-Phenylaminomethyl-trimethoxysilan:

537 g (5,77 mol) Anilin werden in einem Laborreaktor komplett vorgelegt und anschließend mit Stickstoff inertisieren. Man heizt auf eine Temperatur von 115 °C auf und tropft 328 g (1,92 mol) Chlormethyl-trimethoxysilan über 1.5 h zu und rührt für weitere 30 Minuten bei 125 - 130 °C nach. Nach einer Zugabe von ca. 150 g des Silans fällt vermehrt Anilinhydrochlorid als Salz aus, jedoch bleibt die Suspension bis zum Dosierende gut rührbar.

Überschüssig eingesetztes Anilin (ca. 180 g) wird bei gutem Vakuum (62 °C bei 7 mbar) entfernt. Anschließend gibt man bei ca. 50 °C 350 ml Toluol zu und rührt die Suspension für 30 min bei 10 °C um Anilinhydrochlorid vollständig zu kristallisieren. Dieses wird anschließend abfiltriert. Das Lösungsmittel Toluol wird im Teilvakuum bei 60 - 70 °C entfernt. Der Rückstand wird destillativ gereinigt (89-91°C bei 0,16 mbar)

Es wird eine Ausbeute von 331,2g, d.h. 75,9% der Theorie, erreicht bei einer Produktreinheit von ca. 96,5 %. Das Produkt enthält etwa 3,5 % N,N-bis-[trimethoxysilylmethyl]-phenylamin als Verunreinigung.

### Beispiel 3:

In einem 250 ml Reaktionsgefäß mit Rühr-, Kühl und Heizmöglichkeiten werden 30 g (70,6 mmol) eines Polypropylenglycols mit einer mittleren Molmasse von 425 g/mol vorgelegt und durch 1-stündiges Erwärmen auf 100 C im Membranpumpenvakuum entwässert. Anschließend wird auf ca. 50 °C abgekühlt und bei dieser Temperatur werden unter Stickstoff 0,10 g Dibutylzinndilaurat und 24,6 g (141,2 mmol) Toluen-2,4-diisocyanat (TDI) so zugegeben, daß die Temperatur dabei nicht auf über 80 °C steigt. Nach Beendigung der Zugabe wird für 15 min bei 80 °C gerührt.

Man kühlt auf etwa 50 °C ab und gibt 5 ml Vinyltrimethoxysilan als Reaktivverdünner hinzu. Danach tropft man 32,1 g (141,2 mmol) N-Phenylaminomethyl-trimethoxysilan hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die sich bei 50 °C mit einer Viskosität von 18,5 Pas problemlos gießen und weiterverarbeiten läßt.

### Beispiel 4:

50 g der Prepolymermischung aus Beispiel 3 werden mit 1,2 g Schaumstabilisator PC STAB EP 05 (Wacker Chemie GmbH, Germany)und 1,5 g AMS 70 (Wacker Chemie GmbH, Germany) als Haftvermittler vermengt. Anschließend wird diese Mischung in ein Druckglas mit Ventil gefüllt und mit 12 ml 1,1,1,2-Tetrafluorethan (R 134) als Treibmittel beaufschlagt.

Beim Ausbringen dieser Mischung wird ein standfester, weißer Schaum erhalten, der nach ca. 1 min klebfrei wird. Die Zeit bis zur vollständigen Härtung beträgt ungefähr 6 h. Der ausgehärtete Schaum zeichnet sich durch eine hohe Härte aus und besitzt eine gute Porenstruktur, sowohl bei freier Verschäumung als auch beim Verschäumen in einer Fuge.

### Beispiel 5:

Es wird vorgegangen wie bei Beispiel 4. Jedoch werden der schäumbaren Mischung noch zusätzlich 0,75 g Dibutylzinndilaurat zugegeben. Die Klebfreizeit nach dem Aufbringen des Schaumes beträgt nur noch wenige Sekunden (<30 sec.). Struktur und Härte des vollständig ausgehärteten Schaumes bleiben unverändert.

### Beispiele 6

Es wird vorgegangen wie in Beispiel 3. Jedoch werden bei der Prepolymersynthese 0,10 g Eisen(III)-acetylacetonat anstelle von 0,10 g Dibutylzinndilaurat als Katalysator verwendet. Dies hat keinen erkennbaren Einfluß auf den Reaktionsverlauf. Es wird eine tief rote, durchsichtige Prepolymermischung erhalten, in der sich IR-spektroskopisch keine Isocyanatgruppen mehr nachweisen lassen. Sie besitzt bei 50 °C eine Viskosität von ca. 19 Pas und läßt sich somit problemlos gießen und weiterverarbeiten.

### Beispiel 7:

Es wird vorgegangen wie bei Beispiel 4. Es wird jedoch ausschließlich die Prepolymermischung aus Beispiel 6 eingesetzt. Beim Ausbringen der fertig compoundierten Mischung wird ein standfester, orange-gelber Schaum erhalten, der nach ca. 2 min klebfrei wird. Die Zeit bis zur vollständigen Härtung beträgt ungefähr 12 h. Die Struktur des vollständig ausgehärteten Schaumes bleibt unverändert, die Härte ist minimal geringer als in den Beispielen 4 und 5.

### Beispiele 8

Es wird vorgegangen wie in Beispiel 3. Jedoch wird bei der Prepolymersynthese ganz auf einen Katalysator verzichtet (kein Dibutylzinndilaurat). Dafür wird die Reaktionstemperatur bei beiden Reaktionsschritten von 80 auf 90 °C erhöht. Es wird eine klare, durchsichtige Prepolymermischung erhalten, in der sich IR-spektroskopisch keine Isocyanatgruppen mehr nachweisen lassen.

### Beispiel 7:

Es wird vorgegangen wie bei Beispiel 4. Es wird jedoch ausschließlich die Prepolymermischung aus Beispiel 8 eingesetzt. Beim Ausbringen der fertig compoundierten Mischung wird ein standfester, weißer Schaum erhalten, der trotz der Abwesenheit jeglicher metallhaltiger Katalysatoren nach ca. 2 min klebfrei wird. Die Zeit bis zur vollständigen Härtung beträgt ungefähr 12 h. Der vollständig ausgehärtete Schaum unterscheidet sich nicht von dem Schäumen aus den Beispielen 4 und 5. Schaumstruktur und -härte sind unverändert.

### Beispiel 10:

Es wird vorgegangen wie in Beispiel 3. Jedoch werden 29,8 g (141,2 mmol) *N*-Phenylaminomethyl-methyldimethoxysilan als funktionelles Silan entsprechend der Formel 4 - anstelle von 141,2 mmol *N*-Phenylaminomethyl-trimethoxysilan wie in Bsp. 3 - eingesetzt. Es wird eine klare, durchsichtige Prepolymermischung erhalten, in der sich IR-spektroskopisch keine Isocyanatgruppen mehr nachweisen lassen. Sie besitzt bei 50 °C eine Viskosität von ca. 23 Pas und läßt sich somit problemlos gießen und weiterverarbeiten.

### Beispiel 11:

Es wird vorgegangen wie bei Beispiel 4. Es wird jedoch ausschließlich die Prepolymermischung aus Beispiel 10 eingesetzt. Beim Ausbringen der fertig compoundierten Mischung wird ein standfester, weißer Schaum erhalten, der nach ca. 3 min klebfrei wird. Die Zeit bis zur vollständigen Härtung beträgt ungefähr 6 h. Der fertig ausgehärtete Schaum ist elastisch und halbhart. Er besitzt eine gute Porenstruktur, sowohl bei freier Verschäumung als auch beim Verschäumen in einer Fuge.

### Beispiel 12:

In einem 250 ml Reaktionsgefäß mit Rühr-, Kühl und Heizmöglichkeiten werden 28,6 g (110 mmol) eines Polypropylenglycerins mit der mittleren Molmasse von 260 g/mol und 8,1 g eines Polypropylenglycerins der mittleren Molmasse von 1500 g/mol vorgelegt und durch 1-stündiges Erwärmen auf 100 °C im membranpumpenvakuum entwässert. Anschließend wird auf ca. 50 °C abgekühlt und bei dieser Temperatur werden unter Stickstoff 0,10 g Dibutylzinndilaurat und 10,1 g (57,7 mmol) Toluen-2,4-diisocyanat (TDI) zugegen. Die Temperatur sollte dabei nicht auf über 80 °C steigen. Nach Beendigung der Zugabe rührt für weitere 15 min bei dieser Temperatur.

Zu dieser Mischung werden bei 50 °C unter Stickstoffatmosphäre 44,3 g (250 mmol) Isocyanatomethyl-trimethoxysilan gegeben, wobei die Temperatur wiederum bei unter 60 °C bleiben sollte. Anschließend rührt man für 60 min bei 80 °C. In der resultierenden Prepolymermischung lassen sich IR-spektroskopisch keine Isocyanatgruppen mehr nachweisen. Man erhält eine klare, durchsichtige Mischung aus methoxysilanterminierten Prepolymeren, die sich bei 50 °C mit einer Viskosität von ca. 17 Pas problemlos gießen und weiterverarbeiten läßt.

### Beispiel 13:

Es wird vorgegangen wie bei Beispiel 5. Es wird jedoch ausschließlich die Prepolymermischung aus Beispiel 12 eingesetzt. Beim Ausbringen der fertig compoundierten Mischung wird ein standfester, weißer Schaum erhalten, der bereits nach wenigen Sekunden (<30 sec) klebfrei wird. Die Zeit bis zur vollständigen Härtung beträgt ungefähr 4 h. Der fertig ausgehärtete Schaum besitzt eine hohe Härte. Bei freier Verschäumung besitzt er eine gute Porenstruktur, bei der Verschäumung in einer Fuge treten jedoch gelegentlich Risse sowie größere Hohlräume auf.

### Vergleichsbeispiel 1:

Es wird vorgegangen wie in Beispiel 3. Jedoch werden 36,1 g (141,2 mmol) *N*-Phenyl-3-aminopropyl-methyldimethoxysilan (Silquest Y 9669 der Fa. Crompton) - anstelle von 141,2 mmol N-Phenylaminomethyl-trimethoxysilan wie in Bsp. 3 - eingesetzt. Es wird eine klare, durchsichtige Prepolymermischung erhalten, in der sich IR-spektroskopisch keine Isocyanatgruppen mehr nachweisen lassen. Sie besitzt bei 50 C eine Viskosität von ca. 19 Pas und läßt sich somit problemlos gießen und weiterverarbeiten.

### Vergleichsbeispiel 2:

Es wird vorgegangen wie bei Beispiel 5. Es wird jedoch ausschließlich die Prepolymermischung aus dem Vergleichsbeispiel 1 eingesetzt. Beim Ausbringen der fertig compoundierten Mischung wird ein standfester, weißer Schaum erhalten. Die Klebfreizeit beträgt jedoch ca. 3 h anstelle von wenigen Sekunden wie in Beispiel 5. Die Zeit bis zur vollständigen Härtung beträgt mehrere Tage. Der fertig ausgehärtete Schaum zeichnet sich durch eine hohe Härte aus, besitzt jedoch vor allem in der Fuge eine deutlich schlechtere Porenstruktur als der Schaum aus Beispiel 5. Z.T. treten große Blasen und Hohlräume auf.

### Vergleichsbeispiel 3:

Es wird vorgegangen wie in Beispiel 3. Jedoch werden 31,3 g (141,2 mmol) *N*-Ethyl-3-trimethoxysilyl-2-methylpropanamin (A-Link 15 der Fa. Crompton) - anstelle von 141,2 mmol *N*-Phenylaminomethyl-trimethoxysilan wie in Bsp. 3 - eingesetzt. Es wird eine klare, durchsichtige Prepolymermischung erhalten, in der sich IR-spektroskopisch keine Isocyanatgruppen mehr nachweisen lassen. Sie besitzt bei 50 C eine Viskosität von ca. 21 Pas und läßt sich somit problemlos gießen und weiterverarbeiten.

### Vergleichsbeispiel 4:

Es wird vorgegangen wie bei Beispiel 5. Es wird jedoch ausschließlich die Prepolymermischung aus dem Vergleichsbeispiel 3 eingesetzt. Beim Ausbringen der fertig compoundierten Mischung wird ein standfester, weißer Schaum erhalten. Die Klebfreizeit beträgt jedoch ca. 60 min anstelle von wenigen Sekunden wie in Beispiel 5. Die Zeit bis zur vollständigen Härtung beträgt mehrere Tage. Der fertig ausgehärtete Schaum zeichnet sich durch eine hohe Härte aus, besitzt jedoch vor allem in der Fuge eine deutlich schlechtere Porenstruktur als der Schaum aus Beispiel 5.

### Vergleichsbeispiel 5:

Es wird vorgegangen wie in Beispiel 12. Jedoch werden 51,3 g (250 mmol) γ-Isocyanatopropyl-trimethoxysilan (Silquest Y 5187 der Fa. Crompton) - anstelle von 250 mmol Isocyanatomethyltrimethoxysilan wie in Bsp. 12 - eingesetzt. Es wird eine klare, durchsichtige Prepolymermischung erhalten, in der sich IR-spektroskopisch keine Isocyanatgruppen mehr nachweisen lassen. Sie besitzt bei 50 C eine Viskosität von ca. 19 Pas und läßt sich somit problemlos gießen und weiterverarbeiten.

### Vergleichsbeispiel 6:

Es wird vorgegangen wie bei Beispiel 13. Es wird jedoch ausschließlich die Prepolymermischung aus dem Vergleichsbeispiel 5 eingesetzt. Beim Ausbringen der fertig compoundierten Mischung wird ein standfester, weißer Schaum erhalten. Die Klebfreizeit beträgt jedoch ca. 20 min anstelle von wenigen Sekunden wie in Beispiel 13. Die Zeit bis zur vollständigen Härtung beträgt ca. 2 Tage. Der fertig ausgehärtete Schaum zeichnet sich durch eine hohe Härte aus, der bei freier Verschäumung eine ähnlich gute Porenstruktur aufweist wie der Schaum aus Beispiel 13. Bei einer Verschäumung in der Fuge jedoch konnte kein stabiler Schaum erhalten werden. So entstand beim Verschäumen in der Fuge nur eine oberflächliche 5-10 Millimeter dicke Schaumschicht. Der darunterliegende Schaum ist vor seiner Härtung vollständig zusammengebrochen.

## Patentansprüche

1. Isocyanatfreie schäumbare Mischungen, enthaltend
(A) isocyanatfreie, alkoxysilanterminierte Prepolymere (A) welche über Silanterminierungen der allgemeinen Formel [1], 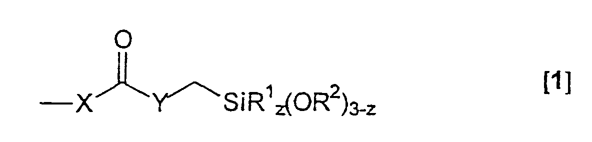 verfügen, in der
X und Y ein Sauerstoffatom, eine N-R³-Gruppe oder ein Schwefelatom,
R¹ einen Alkyl-, Alkenyl- oder Arylrest mit 1-10 Kohlenstoffatomen,
R² einen Alkylrest mit 1-2 Kohlenstoffatomen oder einen - Oxaalkyl-alkylrest mit insgesamt 2-10 Kohlenstoffatomen,
R³ ein Wasserstoffatom, einen Alkyl-, Cycloalkyl-, Alkenyl- oder Arylrest mit 1-10 Kohlenstoffatomen oder eine -CH₂-SiR¹_{z}(OR²)_{3-z}-Gruppe und,
z die Werte 0 oder 1 bedeuten, mit der Maßgabe, daß mindestens eine der beiden Gruppen X oder Y eine NH-Funktion darstellt und
(B) Treibmittel.

2. Schäumbare Mischungen nach Anspruch 1, bei denen die Prepolymere (A) über Silanterminierungen der allgemeinen Formel [2] 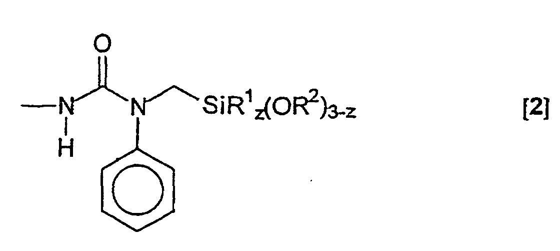 verfügen, wobei R¹, R², und z die in Anspruch 1 angegebenen Bedeutungen aufweisen.

3. Schäumbare Mischungen nach Anspruch 1 oder 2, bei denen das Treibmittel (B) ausgewählt wird aus Kohlenwasserstoffen und Fluorkohlenwasserstoffen mit jeweils 1-5 Kohlenstoffatomen und Dimethylether sowie deren Mischungen.

4. Schäumbare Mischungen nach Anspruch 1 bis 3, bei denen ein niedermolekularer Reaktivverdünner (C) mit einer Viskosität von höchstens 5 Pas bei 20°C, der mindestens eine C₁- bis C₆-Alkoxysilylgruppe pro Molekül aufweist, in der Mischung enthalten ist.

5. Schäumbare Mischungen nach Anspruch 4, bei denen der Reaktivverdünner (C) ausgewählt wird aus Methyl-, Vinyl-, und Phenyltrimethoxysilan und deren Teilhydrolysaten in Konzentrationen >1% bezogen auf das Prepolymer (A).

6. Schäumbare Mischungen nach Anspruch 1 bis 5, bei denen R¹ eine Methyl-, Ethyl- oder Phenylgruppe bedeutet.

7. Schäumbare Mischungen nach Anspruch 1 bis 6, bei denen R² eine Methylgruppe bedeutet.

8. Schäumbare Mischungen nach Anspruch 1 bis 7, bei denen R³ ein Wasserstoffatom, ein Alkylrest mit 1-4 Kohlenstoffatomen, Cyclohexyl- oder Phenylrest bedeutet.

9. Schäumbare Mischungen nach Anspruch 1 bis 8, welche nach dem Schäumen Klebfreizeiten von maximal 5 min bei 20°C aufweisen.

10. Schäumbare Mischungen nach Anspruch 1 bis 9, welche frei von Zinnkatalysator sind.

11. Schäumbare Mischungen nach Anspruch 1 bis 10, welche frei sind von schwermetallhaltigem Katalysator.

12. Schäumbare Mischungen nach Anspruch 1 bis 11, die ein Prepolymer (AO) enthalten, das herstellbar ist durch Addition von Silan der allgemeinen Formel [3] 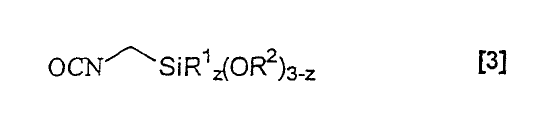 wobei R¹, R² und z die in Anspruch 1 angegebenen Bedeutungen besitzen,
an einen Alkohol (A2) mit mindestens zwei OH-Funktionen pro Molekül, der aufgebaut ist aus verzweigten oder unverzweigten gegebenenfalls mit Halogenatomen, C₁- bis C₆-Alkyl-, -Alkoxy- oder -Acyloxyresten substituierten Kohlenstoffketten, die gegebenenfalls unterbrochen sind durch Gruppen, die ausgewählt werden aus Ether-, Carbonyl-, Estergruppen, aromatischen und cycloaliphatischen Einheiten, wobei Alkohol (A2) keine Urethan- oder Harnstoffeinheiten enthält.

13. Druckdose enthaltend eine schäumbare Mischung nach den Ansprüchen 1-12.

## Claims

1. Isocyanate-free foamable mixtures comprising
(A) isocyanate-free, alkoxysilane-terminated prepolymers (A) which have a silane end group of the formula [1], 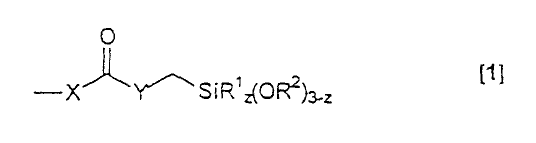 where
X and Y are each an oxygen atom, an N-R³ group or a sulphur atom,
R¹ is an alkyl, alkenyl or aryl radical having 1-10 carbon atoms,
R² is an alkyl radical having 1-2 carbon atoms or an -oxaalkyl alkyl radical having a total of 2-10 carbon atoms,
R³ is a hydrogen atom, an alkyl, cycloalkyl, alkenyl or aryl radical having 1-10 carbon atoms or a -CH₂-SiR¹_{z} (OR²)_{3-z} group and
z is 0 or 1,
with the proviso that at least one of the two groups X and Y is an NH function, and
(B) blowing agents.

2. Foamable mixtures according to Claim 1, wherein the prepolymers (A) have silane end groups of the formula [2] 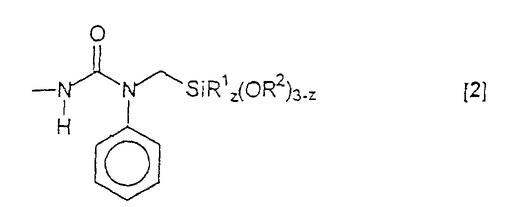 where R¹, R² and z are as defined in Claim 1.

3. Foamable mixtures according to Claim 1 or 2, wherein the blowing agent (B) is selected from among hydrocarbons and fluorinated hydrocarbons each having 1-5 carbon atoms and dimethyl ether and mixtures thereof.

4. Foamable mixtures according to any of Claims 1 to 3, wherein a low molecular weight reactive diluent (C) which has a viscosity of not more than 5 Pas at 20°C and has at least one C₁-C₆-alkoxysilyl group per molecule is present in the mixture.

5. Foamable mixtures according to Claim 4, wherein the reactive diluent (C) is selected from among methyltrimethoxysilane, vinyltrimethoxysilane and phenyltrimethoxysilane and their partial hydrolysis and is present in a concentration of >1%, based on the prepolymer (A).

6. Foamable mixtures according to any of Claims 1 to 5, wherein R¹ is a methyl, ethyl or phenyl group.

7. Foamable mixtures according to any of Claims 1 to 6, wherein R² is a methyl group.

8. Foamable mixtures according to any of Claims 1 to 7, wherein R³ is a hydrogen atom, an alkyl radical having 1-4 carbon atoms, a cyclohexyl radical or a phenyl radical.

9. Foamable mixtures according to any of Claims 1 to 8, which after foaming has a tack-free time of not more than 5 minutes at 20°C.

10. Foamable mixtures according to any of Claims 1 to 9 which is free of tin catalysts.

11. Foamable mixtures according to any of Claims 1 to 10 which is free of catalysts containing heavy metals.

12. Foamable mixtures according to any of Claims 1 to 11 comprising a prepolymer (AO) which can be prepared by addition of a silane of the formula [3] 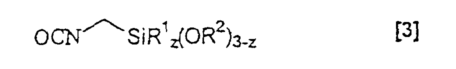 where R¹, R² and z are as defined in Claim 1, onto an alcohol (A2) which has at least two OH functions per molecule and is made up of branched or unbranched hydrocarbon chains which may be substituted by halogen atoms, C₁-C₆-alkyl, -alkoxy or -acyloxy radicals and may be interrupted by groups selected from among ether groups, carbonyl groups, ester groups and aromatic and cycloaliphatic units, where the alcohol (A2) contains no urethane or urea units.

13. Pressure can containing foamable mixtures according to any of Claims 1-12.

## Revendications

1. Mélanges moussants exempts d'isocyanates, qui contiennent :
(A) des prépolymères (A) à terminaisons alcoxysilane et exempts d'isocyanates, qui présentent des terminaisons silane de formule générale [1] 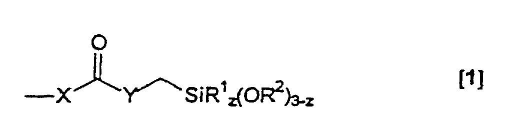 dans laquelle
X et Y représentent un atome d'oxygène, un groupe N-R³ ou un atome de soufre,
R¹ représente un radical alkyle, alcényle ou un aryle qui compte de 1 à 10 atomes de carbone,
R² représente un radical alkyle qui compte de 1 à 2 atomes de carbone ou un radical oxoalkyle-alkyle qui compte en tout de 2 à 10 atomes de carbone,
R³ représente un atome d'hydrogène, un radical alkyle, cycloalkyle, alcényle ou aryle qui compte de 1 à 10 atomes de carbone, ou un groupe -CH₂-SiR¹_{z}(OR²) _{3-z} et
z représente 0 ou 1,
avec la condition qu'au moins l'un des deux groupes X ou Y représente une fonction NH, et
(B) un agent propulseur.

2. Mélanges moussants selon la revendication 1, dans lesquels les prépolymères (A) présentent des terminaisons silane de formule générale [2] 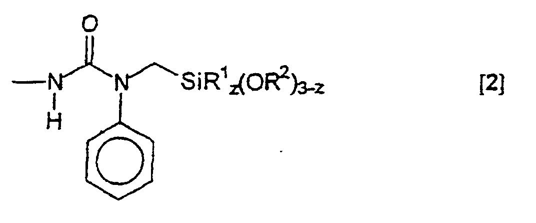 dans laquelle R¹, R² et z ont les significations données en revendication 1.

3. Mélanges moussants selon les revendications 1 ou 2, dans lesquels l'agent propulseur (B) est sélectionné parmi les hydrocarbures et les hydrocarbures fluorés, tous avec 1 à 5 atomes de carbone, et le diméthyléther, ainsi que leurs mélanges.

4. Mélanges moussants selon les revendications 1 à 3, qui contiennent un diluant réactif (C) à bas poids moléculaire, dont la viscosité est d'au plus 5 Pa.s à 20°C et qui présente au moins un groupe alcoxysilyle en C₁ à C₆ par molécule dans le mélange.

5. Mélanges moussants selon la revendication 4, dans lesquels le diluant réactif (C) est sélectionné parmi le méthylsiloxane, le vinylsiloxane et le phényltriméthylsiloxane et leurs hydrolysats partiels, à des concentrations > 1% par rapport au prépolymère (A).

6. Mélanges moussants selon les revendications 1 à 5, dans lesquels R¹ représente un groupe méthyle, éthyle ou phényle.

7. Mélanges moussants selon les revendications 1 à 6, dans lesquels R² représente un groupe méthyle.

8. Mélanges moussants selon les revendications 1 à 7, dans lesquels R³ représente un atome d'hydrogène, un radical alkyle qui compte de 1 à 4 atomes de carbone, un radical cyclohexyle ou un radical phényle.

9. Mélanges moussants selon les revendications 1 à 8, qui, après le moussage, présentent à 20°C des durées de non-adhérence d'au plus 5 min.

10. Mélanges moussants selon les revendications 1 à 9, qui sont exempts de catalyseur à l'étain.

11. Mélanges moussants selon les revendications 1 à 10, qui ne contiennent pas de catalyseur à métaux lourds.

12. Mélanges moussants selon les revendications 1 à 11, qui contiennent un prépolymère (AO) qui peut être préparé par addition d'un silane de formule générale [3] 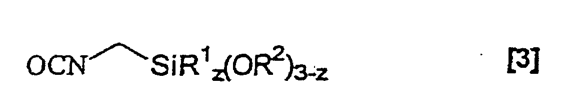 dans laquelle R¹, R² et z ont les significations indiquées en revendication 1, à un alcool (A2) qui contient au moins deux fonctions OH par molécule et qui est constitué de chaînes de carbone ramifiées ou non ramifiées et éventuellement substituées avec des atomes d'halogène, des groupes alkyle, alcoxy et acyloxy, tous en C₁ à C₆, et qui sont éventuellement interrompues par des groupes qui sont sélectionnés parmi les groupes éther, carbonyle, ester, des unités aromatiques et cycloaliphatiques, l'alcool (A2) ne contenant pas d'unités uréthane ou urée.

13. Flacon sous pression qui contient un mélange moussant selon les revendications 1 à 12.
